# EUROPÄISCHE PATENTSCHRIFT

(11) **EP 2 480 446 B1**
(45) Veröffentlichungstag und Bekanntmachung des Hinweises auf die Patenterteilung: **12.02.2014**
(21) Anmeldenummer: 10742806.2
(22) Anmeldetag: 04.08.2010
(51) Int. Cl.: B62M 6/40, B60L 7/10, B62L 5/00, B62M 6/50

(54) **VORRICHTUNG UND VERFAHREN ZUR REGELUNG EINER REKUPERATION BEI EINEM PEDALGETRIEBENEN FAHRZEUG**
APPARATUS AND METHOD TO CONTROL REGENERATIVE BRAKING IN A PEDAL VEHICLE
DISPOSITIF ET PROCÉDÉ DE CONTROLE DE LA RECUPERATION DE L'ÉNERGIE DE FREINAGE DANS UN VÉHICULE À PÉDALES

(30) Priorität: 22.09.2009 DE 102009029658
(43) Veröffentlichungstag der Anmeldung: 01.08.2012
(73) Patentinhaber: Robert Bosch GmbH, 70442 Stuttgart (DE)
(72) Erfinder: VOIGTLAENDER, Klaus, 73117 Wangen (DE); JAKUBOWSKI, Lars, 74232 Abstatt (DE)
(86) Internationale Anmeldenummer: PCT/EP2010/061349
(87) Internationale Veröffentlichungsnummer: WO 2011/035974

(56) Entgegenhaltungen:
- EP-A2- 0 168 905
- EP-A2- 0 784 008
- WO-A2-00/59773
- WO-A2-2007/067717

## Beschreibung

### Stand der Technik

Die vorliegende Erfindung betrifft eine Vorrichtung und ein Verfahren zur Regelung einer Rekuperation bei einem pedalgetriebenen Fahrzeug, wie z.B. einem Fahrrad.

Fahrräder mit elektrischem Hilfsmotor sind aus dem Stand der Technik in unterschiedlichen Ausgestaltungen bekannt. Derartige Fahrräder weisen üblicherweise am Lenker eine von Hand zu bedienende Steuereinheit auf, mit welcher beispielsweise das Zuschalten des elektrischen Hilfsantriebs oder eine Rekuperation möglich ist. Dabei ist aufgrund der manuellen Schaltung insbesondere auch ein Wechsel zwischen einer Rekuperation und einer Reibungsbremse ruckelig und schwierig. Daher wird im alltäglichen Betrieb des Fahrzeugs die Rekuperation häufig nicht benutzt und somit keine Energie zum Aufladen der Batterien zurückgewonnen, obwohl dies eigentlich möglich wäre.

EP 0 168 905 offenbart ein Verfahren zur Regelung einer Rekuperation bei einem pedalgetriebenen Fahrzeug mit einem Kurbeltrieb bei einem Fahrrad, wobei das Fahrzeug einen elektrischen Hilfsantrieb und eine wiederaufladbare Energiequelle aufweist, umfassend den Schritt: Rekuperation von Energie und Speicherung von Energie in der Energiequelle, wenn eine Drehrichtung des Kurbeltriebs rückwärtsgerichtet ist. EP 0 168 905 offenbart auch ein Fahrzeug mit Kurbeltrieb, insbesondere Fahrrad, umfassend einen elektrischen Hilfsantrieb, eine Steuereinheit, wobei die Steuereinheit ausgelegt ist, den elektrischen Hilfsantrieb in Rekuperation zu betreiben.

### Offenbarung der Erfindung

Das erfindungsgemäße Verfahren mit den Merkmalen des Anspruchs 1 weist demgegenüber den Vorteil auf, dass es einfach ausführbar ist und eine gute Rekuperation ermöglicht. Dies wird erfindungsgemäß dadurch erreicht, dass das erfindungsgemäße Verfahren vorsieht, eine Drehrichtung eines Kurbeltriebs zu erfassen und, wenn die Drehrichtung des Kurbeltriebs rückwärts gerichtet ist, eine Rekuperation und Speicherung von Energie im Energiespeicher auszuführen. Somit kann ein Nutzer eines pedalgetriebenen Fahrzeugs einfach durch Umkehrung der Tretrichtung einen Startzeitpunkt für eine Rekuperation schnell und einfach ausführen. Das Fahrzeug kann dabei in der rückwärtsgerichteten Drehrichtung des Kurbeltriebs einen Freilauf aufweisen oder auch eine Rücktrittbremse. Das erfindungsgemäße Verfahren kann dabei von einem Nutzer schnell und sicher ausgeführt werden, ohne dass, wie im Stand der Technik langwierige Suchvorgänge in einem Steuerungsmenü eines manuellen Schaltelements o.ä., notwendig sind.

Eine Rekuperation beginnt erst dann, wenn ein vorbestimmter Drehwinkel in rückwärtsgerichteter Richtung durch den Kurbeltrieb zurückgelegt wurde. Hierdurch kann sichergestellt werden, dass die Rekuperation nicht unabsichtlich schon bei einem kurzen Rückwärtstreten beginnt. Der Drehwinkel, welcher zurückgelegt werden muss, um mit der Rekuperation zu beginnen, liegt vorzugsweise zwischen 10° und 30°, und ist besonders bevorzugt 20°. Gemäß einer bevorzugten Ausgestaltung der Erfindung kann der Drehwinkel auch individuell eingestellt werden, so dass ein Nutzer selbst bestimmen kann, ab welchem Grad des Rückwärtstretens die Rekuperation beginnen soll, z.B. ab einer vollen 360°-Rückwärtsdrehung.

Die Unteransprüche zeigen bevorzugte Weiterbildungen der Erfindung.

Bevorzugt wird die Drehrichtung des Kurbeltriebs am Tretlager und/oder am Abtriebsritzel des Kettentriebs des Fahrrads erfasst. Weiter alternativ kann die Drehrichtung auch mittels eines Drehmomentsensors an einer Tretkurbel erfasst werden.

Besonders bevorzugt wird beim erfindungsgemäßen Verfahren die Rekuperation durch eine vorwärtsgerichtete Drehrichtung des Kurbeltriebs wieder beendet. D.h., ein Nutzer kann die Rekuperation durch einfaches Vorwärtstreten wieder beenden. Somit kann eine besonders einfache Steuerung der Rekuperation durch Rückwärtstreten zum Starten der Rekuperation und Vorwärtstreten zum Beenden der Rekuperation erreicht werden.

Gemäß einer weiteren bevorzugten Ausgestaltung der Erfindung wird bei einem still stehenden Fahrzeug und einem rückwärts gerichteten Drehmoment an der Tretkurbel eine elektrische Haltebremse durch den elektrischen Hilfsantrieb aktiviert. D.h., wenn ein Nutzer am Straßenrand oder an einer Ampel steht und mit zumindest einem Bein den Kurbeltrieb nach hinten drückt, wird die elektrische Haltebremse aktiviert, so dass ein unbeabsichtigtes Losrollen des Fahrzeugs nicht möglich ist. Auch kann hierbei bei einem Abstellen des Fahrzeugs ein Diebstahlschutz durch Aktivieren der elektrischen Haltebremse erreicht werden. Bevorzugt wird eine Deaktivierung der elektrischen Haltebremse mittels einer externen Einrichtung wie z.B. einem Schlüssel, einer Codeeingabe, einem Chip usw., ausgeführt. Alternativ kann eine Deaktivierung auch beispielsweise wieder durch Aufbringen eines nach vorne gerichteten Drehmoments an dem Kurbeltrieb erreicht werden. Dies ist insbesondere bei Stillstand des Fahrzeugs am Berg oder an einer Ampel sinnvoll.

Weiterhin betrifft die vorliegende Erfindung ein Fahrzeug mit einem Kurbeltrieb, insbesondere ein Fahrrad, welches einen elektrischen Hilfsantrieb, eine Steuereinheit und einen Sensor zur Erfassung einer Drehrichtung des Kurbeltriebs aufweist. Die Steuereinheit ist dabei derart ausgelegt, dass der elektrische Hilfsantrieb in Rekuperation betrieben wird, wenn der Sensor eine rückwärtsgerichtete Drehrichtung am Kurbeltrieb erfasst. Somit ermöglicht die Steuereinheit, dass ein Nutzer durch einfaches Rückwärtstreten des Zeitpunkt einer Rekuperation bestimmt. Vorzugsweise ist die Steuereinheit ferner derart ausgelegt, dass in einem Zustand der Rekuperation ein Ende der Rekuperation durch Vorwärtstreten des Kurbeltriebs erreicht wird.

Vorzugsweise ist der Sensor ein Drehzahlsensor oder ein Drehmomentsensor oder ein Dehnungsmessstreifen und ist am Kurbeltrieb, insbesondere an der Tretkurbel, oder am Abtriebsritzel, angeordnet.

Weiter bevorzugt umfasst das Fahrzeug ferner einen Geschwindigkeitssensor zur Erfassung einer aktuellen Fahrzeuggeschwindigkeit. Mit Hilfe eines Werts der aktuellen Fahrzeuggeschwindigkeit kann beispielsweise die Steuereinheit derart ausgelegt sein, dass die Rekuperation bei einem zu starken Abbremsen des Fahrzeugs aufgrund der Rekuperation beendet wird. Alternativ kann auch eine Vorgabe für eine Mindestgeschwindigkeit des Fahrzeugs bei einer Rekuperation vorgegeben werden, um immer die Mindestgeschwindigkeit beizubehalten. Weiter bevorzugt kann mittels des Geschwindigkeitssensors auch sicher ein Stillstand des Fahrzeugs erfasst werden.

### Zeichnung

Nachfolgend wird unter Bezugnahme auf die begleitende Zeichnung ein Ausführungsbeispiel der Erfindung im Detail beschrieben. In der Zeichnung ist:
- Figur 1: eine schematische Seitenansicht eines Fahrrads gemäß einem Ausführungsbeispiel der Erfindung, und
- Figur 2: eine schematische Darstellung der Bauteile eines Zusatzantriebs für das Fahrzeug.

### Bevorzugte Ausführungsform der Erfindung

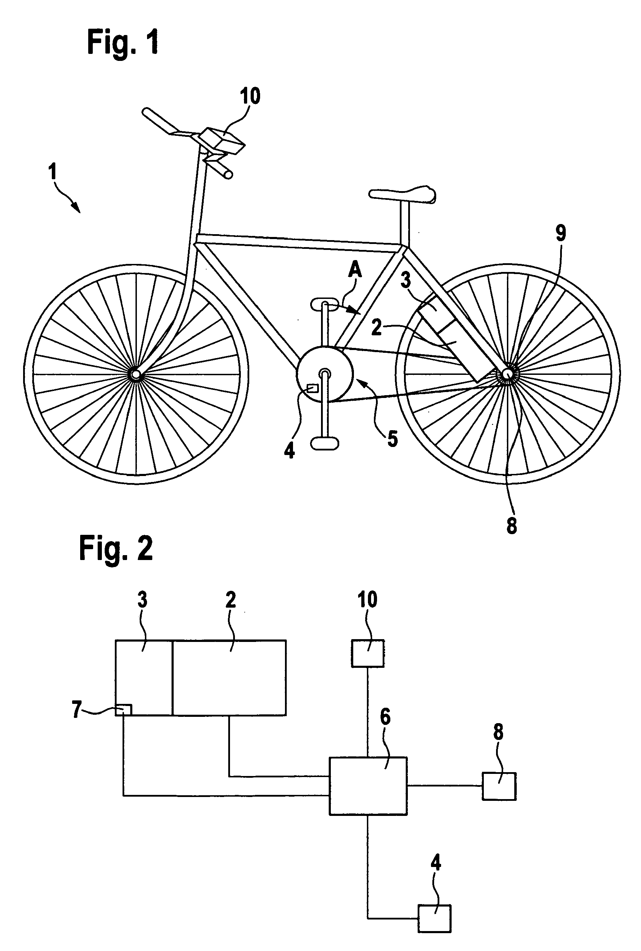

Nachfolgend wird unter Bezugnahme auf die Figuren 1 und 2 ein Fahrzeug gemäß einem bevorzugten Ausführungsbeispiel der Erfindung im Detail beschrieben. Wie aus Figur 1 ersichtlich ist, ist das Fahrzeug in diesem Ausführungsbeispiel ein Fahrrad 1. Das Fahrrad 1 weist einen Zusatzantrieb auf, welcher einen elektrischen Hilfsantrieb 2, eine wiederaufladbare Batterie 3 und eine Steuereinheit 6 umfasst. Der elektrische Hilfsantrieb 2 ist vorzugsweise ein kompakter Elektromotor mit integriertem Getriebe, insbesondere Planetengetriebe. Der Zusatzantrieb umfasst ferner einen Drehrichtungssensor 4, welcher an einem Kurbeltrieb 5 des Fahrrads angeordnet ist. Der Drehrichtungssensor 4 erfasst dabei eine Drehrichtung des Kurbeltriebs 5, d.h., eine nach vorne gerichtete Drehrichtung oder eine nach hinten gerichtete Drehrichtung. Wenn der Drehrichtungssensor 4 kein Signal an die Steuereinheit 6 abgibt, heißt dies, dass der Kurbeltrieb gerade nicht betätigt wird. Ferner ist ein Geschwindigkeitssensor 8 vorgesehen, welcher eine aktuelle Geschwindigkeit des Fahrrads 1 erfasst. Der Geschwindigkeitssensor 8 kann dabei beispielsweise am Abtriebsritzel 9 eines Kettentriebs des Fahrzeugs angeordnet sein.

Weiterhin ist an einem Lenker des Fahrrads eine Bedieneinheit 10 angeordnet, mit welcher der elektrische Hilfsantrieb 2 zugeschaltet und abgeschaltet werden kann.

Die Steuereinheit 6 des Zusatzantriebs ist dabei ausgelegt, dass bei einem Rückwärtstreten des Kurbeltriebs eine Rekuperation, d.h., Rückgewinnung von Energie, gestartet wird. D.h., wenn ein Nutzer den Kurbeltrieb in rückwärtsgerichteter Richtung, d.h., nach hinten tritt, wird der Elektromotor des elektrischen Hilfsantriebs als Generator betrieben und die Batterie 3 aufgeladen. Die Batterie 3 umfasst einen Batteriesensor 7, welcher einen Ladezustand der Batterie an die Steuereinheit 6 weitergibt. In Figur 1 ist die rückwärtsgerichtete Drehrichtung dabei durch den Pfeil A angedeutet.

Somit kann bei dem erfindungsgemäßen Fahrrad durch Erfassen einer rückwärtsgerichteten Drehrichtung des Kurbeltriebs 5 eine Energierückgewinnung gestartet werden. Eine Beendigung der Energierückgewinnung wird durch ein nach vorne gerichtetes Treten des Kurbeltriebs 5 erreicht. Somit kann erfindungsgemäß eine sehr einfache Regelungsmöglichkeit einer Rekuperation bereitgestellt werden, welche insbesondere auch von älteren Personen einfach zu bedienen ist. Da die Drehrichtungserkennung direkt am Kurbeltrieb 5 erfolgt, wird kein zusätzlicher großer Bauraum für einen entsprechenden Drehrichtungssensor 4 benötigt. Da das Fahrrad 1 bei einer Rekuperation gleichzeitig abbremst, wird im Falle eines von einem Nutzer gewünschten Bremsvorgangs weniger Bremsenergie mittels einer Handbremse und/oder Rücktrittbremse aufzuwenden sein. Weiterhin kann erfindungsgemäß die Bedieneinheit 10 sehr einfach aufgebaut sein und insbesondere nur mit einer minimalen Knopf- bzw. Schalteranzahl ausgerüstet sein, da die Rekuperation über das Rückwärtstreten am Kurbeltrieb erfolgt. Die Bedieneinheit kann somit lediglich z.B. einen Schalter mit zwei Stellungen, d.h., Zusatzantrieb mit EIN oder AUS, aufweisen. Hierdurch wird insbesondere die Bedienung für ältere Personen weiter vereinfacht.

## Patentansprüche

1. Verfahren zur Regelung einer Rekuperation bei einem pedalgetriebenen Fahrzeug (1) mit einem Kurbeltrieb (5), insbesondere bei einem Fahrrad, wobei das Fahrzeug einen elektrischen Hilfsantrieb (2) und eine wiederaufladbare Energiequelle (3) aufweist, umfassend die Schritte:
- Erfassen einer Drehrichtung (A) des Kurbeltriebs (5), und
- Rekuperation von Energie und Speicherung von Energie in der Energiequelle (3), wenn eine Drehrichtung (A) des Kurbeltriebs (5) rückwärtsgerichtet ist, wobei der Schritt des Rekuperierens erst erfolgt, wenn ein vorbestimmter Drehwinkel in rückwärtsgerichteter Drehrichtung am Kurbeltrieb zurückgelegt wurde.

2. Verfahren nach Anspruch 1, **dadurch gekennzeichnet, dass** der vorbestimmte Drehwinkel individuell einstellbar ist.

3. Verfahren nach einem der vorhergehenden Ansprüche, **dadurch gekennzeichnet, dass** die Drehrichtung (A) am Tretlager des Kurbeltriebs und/oder an einem Abtriebsritzel (9) erfasst wird.

4. Verfahren nach einem der vorhergehenden Ansprüche, **dadurch gekennzeichnet, dass** die Rekuperation durch eine vorwärtsgerichtete Drehrichtung des Kurbeltriebs (5) wieder beendet wird.

5. Verfahren nach einem der vorhergehenden Ansprüche, **dadurch gekennzeichnet, dass** bei einem Stillstand des Fahrzeugs und einer rückwärtsgerichteten Drehrichtung des Kurbeltriebs eine elektrische Haltebremse durch den elektrischen Hilfsantrieb (2) aktiviert wird.

6. Verfahren nach Anspruch 5, **dadurch gekennzeichnet, dass** eine Deaktivierung der elektrischen Haltebremse mittels einer externen Einrichtung, insbesondere einem Schlüssel, einer Codeeingabe oder einem Chip, erfolgt, oder dass eine Deaktivierung durch eine vorwärtsgerichtete Drehung des Kurbeltriebs (5) erfolgt.

7. Fahrzeug mit Kurbeltrieb (5), insbesondere Fahrrad, umfassend einen elektrischen Hilfsantrieb (2), eine Steuereinheit (6) und einen Sensor (4) zur Erfassung einer Drehrichtung des Kurbeltriebs (5), wobei die Steuereinheit (6) ausgelegt ist, den elektrischen Hilfsantrieb (2) in Rekuperation zu betreiben, wenn der Sensor (4) eine rückwärtsgerichtete Drehrichtung des Kurbeltriebs (5) erfasst, und ausgelegt ist, den Schritt des Rekuperierens erst zu bewirken, wenn ein vorbestimmter Drehwinkel in rückwärtsgerichteter Drehrichtung am Kurbeltrieb zurückgelegt wurde.

8. Fahrzeug nach Anspruch 7, **dadurch gekennzeichnet, dass** der Sensor (4) ein Drehmomentsensor und/oder einen Dehnungsmessstreifen umfasst und dass der Sensor (4) am Kurbeltrieb (5) oder am Abtriebsritzel (9) angeordnet ist.

9. Fahrzeug nach einem der Ansprüche 7 oder 8, ferner umfassend einen Geschwindigkeitssensor (8) zur Ermittlung einer Fahrzeuggeschwindigkeit.

## Claims

1. Method for controlling regeneration of energy in a pedal-operated vehicle (1) having a crank drive (5), in particular in the case of a bicycle, wherein the vehicle has an electric auxiliary drive (2) and a rechargeable energy source (3), comprising the steps:
- sensing a direction (A) of rotation of the crank drive (5), and
- regenerating energy and storing energy in the energy source (3) if a direction (A) of rotation of the crank drive (5) is directed rearward, wherein the regeneration step does not take place until a predetermined rotational angle has been travelled through in the rearward directed direction of rotation at the crank drive.

2. Method according to Claim 1, **characterized in that** the predetermined rotational angle can be set individually.

3. Method according to either of the preceding claims, **characterized in that** the direction (A) of rotation is sensed at the bottom bracket of the crank drive and/or at an output pinion (9).

4. Method according to one of the preceding claims, **characterized in that** the regeneration of energy is ended again by a forward directed direction of rotation of the crank drive (5).

5. Method according to one of the preceding claims, **characterized in that** when the vehicle is in a stationary state and there is a rearward directed direction of rotation of the crank drive an electric holding brake is activated by the electric auxiliary drive (2).

6. Method according to Claim 5, **characterized in that** the electric holding brake is deactivated by means of an external device, in particular a key, a code input or a chip, or **in that** deactivation is carried out by a forward directed rotation of the crank drive (5).

7. Vehicle having a crank drive (5), in particular bicycle, comprising an electric auxiliary drive (2), a control unit (6) and a sensor (4) for sensing a direction of rotation of the crank drive (5), wherein the control unit (6) is configured to operate the electric auxiliary drive (2) in a regenerative mode if the sensor (4) senses a rearward direction of rotation of the crank drive (5), and is configured not to bring about the regeneration step until a predetermined rotational angle in the rearward direction of rotation at the crank drive has been passed through.

8. Vehicle according to Claim 7, **characterized in that** the sensor (4) comprises a torque sensor and/or a strain gauge, and **in that** the sensor (4) is arranged on the crank drive (5) or on the output pinion (9).

9. Vehicle according to either of Claims 7 and 8, also comprising a speed sensor (8) for determining a vehicle speed.

## Revendications

1. Procédé de régulation de la récupération sur un véhicule (1) entraîné par pédales et doté d'un entraînement à manivelle (5), en particulier sur une bicyclette, le véhicule présentant un entraînement électrique auxiliaire (2) et une source d'énergie (3) rechargeable, le procédé comportant les étapes qui consistent à :
- saisir le sens de rotation (A) de l'entraînement à manivelle (5) et
- récupérer de l'énergie et accumuler de l'énergie dans la source d'énergie (3) lorsque le sens de rotation (A) de l'entraînement à manivelle (5) est dirigé vers l'arrière, l'étape de récupération ne s'effectuant que si un angle de rotation prédéterminé dans le sens de rotation arrière a été parcouru par l'entraînement à manivelle.

2. Procédé selon la revendication 1, **caractérisé en ce que** l'angle de rotation prédéterminé peut être réglé individuellement.

3. Procédé selon l'une des revendications précédentes, **caractérisé en ce que** le sens de rotation (A) est saisi sur le pédalier de l'entraînement à manivelle et/ou sur un pignon entraîné (9).

4. Procédé selon l'une des revendications précédentes, **caractérisé en ce que** la récupération est interrompue lorsque le sens de rotation de l'entraînement à manivelle (5) est de nouveau dirigé vers l'avant.

5. Procédé selon l'une des revendications précédentes, **caractérisé en ce que** lorsque le véhicule est à l'arrêt et que le sens de rotation de l'entraînement à manivelle est dirigé vers l'arrière, un frein électrique de maintien est activé par l'entraînement électrique auxiliaire (2).

6. Procédé selon la revendication 5, **caractérisé en ce que** la désactivation du frein électrique de maintien s'effectue au moyen d'un dispositif externe, en particulier une clé, l'introduction d'un code ou une puce, ou **en ce que** la désactivation résulte du fait que le sens de rotation de l'entraînement à manivelle (5) est dirigé vers l'avant.

7. Véhicule doté d'un entraînement à manivelle (5), en particulier bicyclette, comprenant un entraînement électrique auxiliaire (2), une unité de commande (6) et un capteur (4) qui saisit le sens de rotation de l'entraînement à manivelle (5),
l'unité de commande (6) étant conçue pour conduire l'entraînement électrique auxiliaire (2) en récupération lorsque le capteur (4) saisit que le sens de rotation de l'entraînement à manivelle (5) est dirigé vers l'arrière et étant conçu pour ne lancer l'étape de récupération que si un angle de rotation prédéterminé dans le sens de rotation vers l'arrière a été parcouru par l'entraînement à manivelle.

8. Véhicule selon la revendication 7, **caractérisé en ce que** le capteur (4) comporte un capteur de couple de rotation et/ou un ruban de mesure d'allongement et **en ce que** le capteur (4) est disposé sur l'entraînement à manivelle (5) ou sur le pignon entraîné (9).

9. Véhicule selon l'une des revendications 7 ou 8, comprenant en outre un capteur de vitesse (8) qui détermine la vitesse du véhicule.
